(19) 

**Europäisches Patentamt**

**European Patent Office**

**Office européen des brevets**

(11) **EP 4 541 189 A1**

(12) **EUROPEAN PATENT APPLICATION**

(43) Date of publication:
23.04.2025   Bulletin 2025/17

(21) Application number: 24206583.7

(22) Date of filing: 15.10.2024

(51) International Patent Classification (IPC):
**A01N 59/00** (2006.01)

(52) Cooperative Patent Classification (CPC):
**A01N 59/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023   IT 202300021693**

(71) Applicant: **Societa' Italiana Acetilene & Derivati S.I.A.D.**
**S.p.A. in breve S.I.A.D. S.p.A.**
**24126 Bergamo (IT)**

(72) Inventors:
• **BISSOLOTTI, Giorgio**
  24126 BERGAMO (IT)
• **PASINETTI, Eleonora**
  24126 BERGAMO (IT)
• **PERONI, Michela**
  24126 BERGAMO (IT)
• **SODERINO, Davide**
  24126 BERGAMO (IT)
• **ALETTI, Beatrice**
  24126 BERGAMO (IT)

(74) Representative: **Bianchetti & Minoja with Trevisan & Cuonzo IPS SRL**
**Via Plinio, 63**
**20129 Milano (IT)**

(54) **MIXTURES OF GASES USEFUL FOR CULTIVATION OF PLANT ORGANISMS ADMINISTERED IN GASEOUS FORM OR DISSOLVED IN SOLUTION**

(57)   The invention describes the use of argon and hydrogen mixtures as adjuvants for the cultivation, protection and storage of plants.

## Description

The present invention relates to the use of mixtures of gases, administered either in solution or in the atmosphere, to improve plant cultivation.

## Introduction

Plants need different growth conditions, and various species are grown and marketed not only for food purposes but also for the production of active ingredients useful in the medicinal, cosmetic and cosmeceutical fields.

Some gases can have targeted effects on plant growth which are not yet fully understood; examples of such gases include hydrogen, argon, xenon, neon, helium, krypton, carbon dioxide, oxygen, nitrogen, ethylene, nitrous oxide, carbon monoxide and hydrogen sulphide.

Many of said gases have been studied to improve plant storage. However, there are very few studies of the influence of said gases during the plant growth process.

The gases most extensively studied for their effects on growth are hydrogen and carbon dioxide.

The beneficial properties of $H_2$ on various cell types and various organisms are reported in numerous scientific articles.

Hydrogen inhibits oxidative-stress-induced mechanisms caused by an increase in reactive oxygen species (hydrogen peroxide, superoxide anion ($O_2$-; • OH), ONOO- ) and nitrogen species, which interfere with normal cell homeostasis, causing a reduction in fundamental cell survival signals and inducing apoptosis. Hydrogen has a scavenging action against said species, which counteracts their effects. Recent tests have demonstrated that $H_2$ is an antioxidant, anti-apoptotic and anti-inflammatory agent, and can therefore have potential medical applications and applications in the plant growing and/or storage fields (1).

In view of the results of tests using hydrogen-enriched water, the prospects for its application in agriculture are very attractive. Recently, some field tests conducted in China demonstrated that the individual hydrogen gas solubilised in water is useful for agricultural production, especially as regards the nutritional value of crops. Hydrogenated water enables a reduction or even elimination of pesticides as well as positive and regulating effects on seed germination, flowering time and improved resistance to crop stress (due to weather or pests), leading to an overall improvement in quality and faster, more uniform growth (2-4).

Treatment with 0.5% and 1% hydrogen-rich water (HRW) also increases the vase life and maximum diameter of lilies and cut roses, effectively maintains the water content of the leaves, significantly reduces leaf malondialdehyde content and loss of electrolytes, and also promotes antioxidant enzyme activity. This leads to an improvement in the durability and post-harvest quality of cut flowers, by maintaining a correct water balance and greater stability of the cell membranes, and reducing the size of stomata and oxidative damage; the result is delayed wilting of cut flowers.

Various studies have demonstrated that hydrogen-rich water increases the life of cut flowers by 40%, maintaining them in an excellent state after picking (5).

When used in agriculture, argon exhibits effects on storage after harvesting of produce. Argon, used during the growing/harvesting cycle or to modify the atmosphere for storage of foods in the final container (modified atmosphere packaging - MAP), prevents oxidation/colour change and weight loss, reduces the bacteria and parasite count, and inhibits the cellular respiration responsible for aging.

Studies have demonstrated that by using high-pressure treatments (0.5-1.4 MPA) and low temperatures, noble gases such as Ar and Xe form complexes via weak bonds (Van Der Waals forces) with water molecules, called clathrate hydrates. Water complexed in this way is unable to mediate the reactions essential for cellular respiration, thus slowing down ageing and allowing more effective storage of plants over time (6-11) . It is also known that argon and other noble gases have a slowing effect on oxidative degradation reactions, partly due to the mechanical effect of oxygen displacement, thereby helping to maintain better visual conditions (colour and appearance) than observed with exposure to air. Some noble gases therefore exhibit an important physical/mechanical action for oxidative protection of the foods treated.

The properties of said gases have been studied in the literature and applied using the individual gases; moreover, most of the studies relate to post-harvest storage, not to their effects on plant growth.

## Description of the invention

It has now been found that the use of argon and hydrogen mixtures provides synergistic effects for the purpose of cultivating plants such as vegetables, fruit, ornamental flowers, and agricultural produce in general.

The object of the invention is therefore the use of argon and hydrogen mixtures as adjuvants for plant cultivation, protection and storage.

A particularly preferred mixture consists of 97 mol/mol% argon and hydrogen at the concentration of 3 mol/mol %.

The hydrogen and argon mixtures can be used directly in gaseous form or dissolved in solution in water or other suitable solvents.

The mixtures in gaseous form are placed in contact with the aerial parts of the plants in a confined environment, while the mixtures in solution are placed in contact with the root system of the plants.

The mixtures according to the invention, placed in contact with the plants by the methods indicated at various stages of growth, enable the growth of the plants to be modulated and increased, improving their resistance to adverse events such as absence of water or attack by parasites or insects.

For this purpose, as stated, the argon and hydrogen mixtures can be added in the atmosphere so as to promote the growth and maintenance of crops in confined industrial or domestic premises.

Alternatively or additionally, the mixtures dissolved in water or in specific solutions are used in irrigation systems to promote the growth and maintenance of crops in confined or open industrial or domestic premises.

If the mixtures are used in the atmosphere, the safety aspects associated, for example, with the inflammability of hydrogen, must be considered. The concentrations must then be suitably controlled. The molar concentration intervals of the gases in the mixtures can range within wide limits, for example as reported below:

- argon: 0.1-80 mol%;
- $H_2$: 0.1-80 mol%;

The formation of the atmospheres can be generated by introducing pre-prepared mixtures or mixtures prepared at the time of use, starting with mixtures of gases placed in containers or prepared from the individual gases at the time of use, using mixers.

The mixtures according to the invention are useful at different growth stages, and varying concentrations of gases can be used, depending on the stage of growth and the result achieved by the cytoprotective, growth, anti-inflammatory and trophic effects.

If the gas mixtures are dissolved in water before being supplied to the crops, they can be:

- pre-prepared dissolved in water or in solution, and placed in containers of various formats;
- dissolved in water or in solution at the time of use, starting with mixtures of gases placed in containers or prepared from the individual gases at the time of use, using mixers;
- dissolved in water or in solution at the time of use, starting with the individual gases.

The gases and mixtures of gases can be placed:

- in containers, consisting of 0.1 to 1 litre canisters, in cylinders, in particular 1 litre to 50 litre cylinders, or cylinder bundles, consisting of a set of connected cylinders;
- in tanks under pressure.

The loading pressures of the containers wherein the gases or mixtures are placed can range between 2 bars and 350 bars.

The above procedures can be applied in industrial premises and domestic premises. The methods of use of said gases and mixtures can be applied:

- in the atmosphere where the leaf system is located;
- in the atmosphere or in an unsaturated medium, where the root system is located;
- dissolved in water or in solution where the root system is located;
- in a combination of said possibilities.

The solubility and density characteristics of the gases are as follows:

- $H_2$: solubility in water: 0.0178 mg/l at 20°C, relative density, liquid (water=1): 71.0 kg/m$^3$, relative density, gas (air=1): 0.0820 kg/m$^3$, inflammability range 4-77 vol%;
- Ar: solubility in water: 67.3 mg/l at 20°C and at the pressure of 1 bar, relative density of liquid (water=1) = 138.3 kg/m$^3$, relative density of gas (air=1) = 1.784 kg/m$^3$.

The argon and hydrogen mixtures produced favourable effects:

- on the growth of various types of vegetables (for example, in the case of pulse growing, faster and more efficient elongation of the hypocotyl and root cells was observed);
- better yield and growth quality were recorded in Solanaceae;
- better yield and growth quality were recorded in strawberries and red fruits;
- faster growth and longer harvesting periods were recorded in the flower and fruit growing fields.

An example of application of the mixture consisting of 97% argon and hydrogen at the concentration of 3% is set out below.

*Improvement in growth of basil plant*

The plant used for the first test was *Ocimum basilicum.*

The experimental activity involved laboratory-scale activities in benchtop propagators and in a controlled growth chamber on a pilot scale. The same nutrient solutions were used for both growth chamber and laboratory experiments. The following parameters were measured during the tests:

- Height of plant, height being calculated from the soil line.
- Length of roots, calculated from the soil line.
- Number of leaves, newly-sprouted leaves being included in the count.
- Leaf area, calculated with the formula:

$$S_f = Leaf\ length \cdot Leaf\ width \cdot \frac{\pi}{4}$$ , approximating the leaf area to an ellipse.

- Production yield (plant mass).
- Evaluation of sensory aspects (instrumental analysis of volatile chemical profile).
- Study of antioxidant properties of the plants.

During the various experimental steps, the parameters designed to monitor the quality of the growth solutions and the effects of the plants thereon were: pH, RedOx potential, conductivity, dissolved oxygen, and temperature in the growth solutions.

The laboratory tests consisted of a number of successive steps:

- Step 0 (control): the objective was to identify the optimum growth configuration to define the control in the subsequent tests with regard to the effects of the nutrient solution and the dissolved oxygen concentration.
- Step 1: evaluation of the impact of the Ar/H2 test mixture on the growth of basil plants under different aeration conditions, and comparison with the growth of said plants in a supersaturated $O_2$ solution and with the control conditions identified in the preceding step.
- Step 3: evaluation of the effects of the individual gases constituting the mixture (argon only and hydrogen only - mixed with nitrogen for safety reasons) compared with those obtained with the mixture, checking for synergistic effects.
- Step 4: checking a water recirculation system to evaluate any effects and interactions with the diffusion of the gases and checking the effects of the preceding step on the individual gases by comparison with the mixture.
- Step 5: checking the effect of the Ar/$H_2$ mixture under conditions of nutrient scarcity, and testing four different dosage methods of the mixture of gases to evaluate any differences.
- Step 6: this step was identical to the preceding step, to establish its repeatability.
- Step 7: this step was identical to the two preceding steps, to establish their repeatability.
- Step 8: identification of the best method of supplying the mixture of gases.

The tests were repeated 8 times.

The main results of the eight sets of experiments conducted on a laboratory scale demonstrate that the argon and hydrogen mixture tested stimulated the growth and productivity of the plant. Specifically, the following results were observed:

- increase in average plant height: 48%
- increase in average number of leaves: 35%

- average increase in total leaf area: 33%
- average increase in plant mass: 24%

The instrumental investigations demonstrated the presence of bioactive compounds typical of the plant species studied, and the absence of extraneous secondary metabolites.

Exposing plants to the gas mixture has been shown to modulate the plant's antioxidant defences, with different responses depending on exposure conditions and enzymatic activity.

The tests conducted also enabled the synergistic effect of the argon and hydrogen gases to be evaluated.

The comparative data, demonstrating a synergistic effect of Ar and $H_2$ compared with argon alone or the use of pure oxygen, are set out below.

*Comparison between Ar/$H_2$ mixture and argon only*

- Height: Ar/$H_2$ mixture +27-58% compared with pure Ar
- Roots: Ar/$H_2$ mixture +4% compared with pure Ar
- Number of leaves: Ar/$H_2$ mixture +31-38% compared with pure Ar
- Leaf area: Ar/$H_2$ mixture +20% compared with pure Ar
- Total leaf area: Ar/$H_2$ mixture +18-49% compared with pure Ar

*Comparison between Ar/$H_2$ mixture and enrichment with oxygen only*

- Height: Ar/$H_2$ mixture +5-12% compared with oxygen
- Roots: Ar/$H_2$ mixture +11-78% compared with oxygen
- Number of leaves: Ar/$H_2$ mixture +2-20% compared with oxygen
- Leaf area: Ar/$H_2$ mixture +8-19% compared with oxygen
- Total leaf area: Ar/$H_2$ mixture +14-23% compared with oxygen

**References**

1. Molecular hydrogen is involved in phytohormone signaling and stress responses in plants. Zeng J, Zhang M, Sun X. s.l. : PLoS One. 2013; 8(8):e71038.

2. Fermentative and photochemical production of hydrogen in algae. Gaffron H, Rubin J. s.l. : J Gen Physiol 1942;26:219-240. doi: 10.1085/jgp.26.2.219.

3. Absorption of molecular hydrogen by green leaves in light. GA, Sanadze. s.l. : Fiziol Rast. 1961;8:555-559.

4. Hydrogen gas acts as a novel bioactive molecule in enhancing plant tolerance to paraquat-induced oxidative stress via the modulation of heme oxygenase-1 signalling system. Jin Q, Zhu K, Cui W, Xie Y, Han B, Shen W. s.l. : Plant Cell Environ. 2013;36(5):956-969. doi: 10.1111/pce. 12029.

5. Effect of hydrogen-rich water on vase life and quality in cut lily and rose flowers. all., Peng-Ju Ren at. s.l. : December 2017Horticulture, Environment and Biotechnology 58(6):576-584.

6. "Argon Packaging and Processing Preserves and Enhances Flavor, Freshness, and Shelf Life of Foods" . Humphreys:, Spencer and. s.l. : Freshness and Shelf Life of Foods Chapter 20pp 270-291.

7. Effects of Pressurized Argon and Krypton Treatments on the Quality of Fresh White Mushroom (Agaricus bisporus). Lagnika, Camel & Zhang, Min & Bashari, Mohanad & Tounkara, Fatoumata. s.l. : Journal of food and nutrition research. 4. 1191-1200.. 10.4236/fns.2013.412153. , 2013.

8. Effects of Argon-Based and Nitrogen-Based Modified Atmosphere Packaging Technology on the Quality of Pomegranate (Punica granatum L. cv. Wonderful) Arils. Tinebra, I., et al. s.l. : Foods 2021, 10, 370.

9. Effects of high-pressure argon and nitrogen treatments on respiration, browning and antioxidant potential of minimally processed pineapples during shelf life. Wu ZS, Zhang M, Wang SJ. s.l. : J Sci Food Agric. 2012 Aug 30;92(11):2250-9. doi: 10.1002/jsfa.5612. Epub 2012 Feb 24. PMID: 22368048.

10. Mixed noble gas effect on cut green peppers.. Raymond, Linda & Ming, Zhang & Eric, Karangwa & Cheserek, Maureen. s.l. : International Agrophysics. 27. 75-79. 10.2478/v10247-012-0070-2., 2013.

11. Extending the shelf life of asparagus spears with a compressed mix of argon and xenon gases. Zhang, Maggie & Zhan, Z.G. & Wang, Shaojin & Tang, J.M. s.l. : LWT - Food Science and Technology. 41. 686-691. 10.1016/j.lwt.2007.04.011. , 2008.

## Claims

1. Use of a mixture of argon and hydrogen as adjuvant for the cultivation, protection and storage of plants.

2. Use according to claim 1 wherein the mixture comprises argon at a concentration of 97 mol/mol% and hydrogen at a concentration of 3 mol/mol%.

3. Use according to claim 1 or 2 wherein the mixture is used in gaseous form or as a solution in water or other suitable solvents.

4. Use according to claim 3 wherein the mixtures in gaseous form are placed in contact with the aerial parts of plants in a confined environment.

5. Use according to claim 4 wherein the mixtures in solution are placed in contact with the root system of plants.

6. Use according to one or more of the preceding claims wherein the plants are selected from vegetables, fruit plants and ornamental flowers.

Europäisches
Patentamt
European
Patent Office
Office européen
des brevets

# EUROPEAN SEARCH REPORT

Application Number

EP 24 20 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 103 749 109 A (DING ZHIQIANG) 30 April 2014 (2014-04-30) * paragraph [01.2]; claim 1 * ----- | 1-6 | INV. A01N59/00 |
| Y | WANG JUN ET AL: "Argon-stimulated nitric oxide production and its function in alfalfa cadmium tolerance", ENVIRONMENTAL POLLUTION, vol. 333, 1 September 2023 (2023-09-01), page 122009, XP093150497, GB ISSN: 0269-7491, DOI: 10.1016/j.envpol.2023.122009 * Results; paragraph [03.3]; figures 3-6, 8 * ----- | 1-6 | |
| Y | WANG JUN ET AL: "A New Discovery of Argon Functioning in Plants: Regulation of Salinity Tolerance", ANTIOXIDANTS, vol. 11, no. 6, 14 June 2022 (2022-06-14), page 1168, XP093150141, ISSN: 2076-3921, DOI: 10.3390/antiox11061168 * page 13, paragraphs 3.1, 4, 5 * ----- | 1-6 | |
| Y | US 10 888 050 B2 (THE AGRICULTURAL GAS COMPANY INC [US]; THE AGRICULTURAL GAS CO [US]) 12 January 2021 (2021-01-12) * column 3 * ----- | 1-6 | |
| Y | WO 2022/056419 A1 (AIR LIQUIDE [FR]; AIR LIQUIDE AMERICAN [US]) 17 March 2022 (2022-03-17) * claims 1-4 * ----- -/-- | 1-6 | |

**TECHNICAL FIELDS SEARCHED (IPC)**

A01N

The present search report has been drawn up for all claims

| Place of search | Date of completion of the search | Examiner |
|---|---|---|
| Munich | 3 March 2025 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 20 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIQING ZENG ET AL: "Progress in the study of biological effects of hydrogen on higher plants and its promising application in agriculture", MEDICAL GAS RESEARCH, BIOMED CENTRAL LTD, LONDON, UK, vol. 4, no. 1, 20 August 2014 (2014-08-20), page 15, XP021198189, ISSN: 2045-9912, DOI: 10.1186/2045-9912-4-15 * the whole document * | 1-6 | |
| Y | KARLE SUHAS BALASAHEB ET AL: "Insights into the Role of Gasotransmitters Mediating Salt Stress Responses in Plants", JOURNAL OF PLANT GROWTH REGULATION, SPRINGER VERLAG, NEW YORK, NY, US, vol. 40, no. 6, 13 January 2021 (2021-01-13), pages 2259-2275, XP037626376, ISSN: 0721-7595, DOI: 10.1007/S00344-020-10293-Z [retrieved on 2021-01-13] * the whole document * | 1-6 | |
| Y | CN 113 207 470 A (UNIV NANJING AGRICULTURAL) 6 August 2021 (2021-08-06) * claims 1-9 * | 1-6 | |
| Y | US 5 950 362 A (SHORS JOHN D [US] ET AL) 14 September 1999 (1999-09-14) * claims 1-6 * | 1-6 | |

**TECHNICAL FIELDS SEARCHED (IPC)**

The present search report has been drawn up for all claims

| Place of search | Date of completion of the search | Examiner |
|---|---|---|
| Munich | 3 March 2025 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6583

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | | Publication date | Patent family member(s) | | Publication date |
|---|---|---|---|---|---|
| CN 103749109 | A | 30-04-2014 | NONE | | |
| US 10888050 | B2 | 12-01-2021 | NONE | | |
| WO 2022056419 | A1 | 17-03-2022 | AU | 2021339838 A1 | 04-05-2023 |
| | | | CA | 3192594 A1 | 17-03-2022 |
| | | | CN | 116390643 A | 04-07-2023 |
| | | | EP | 4210470 A1 | 19-07-2023 |
| | | | JP | 7574416 B2 | 28-10-2024 |
| | | | JP | 2023541135 A | 28-09-2023 |
| | | | US | 2023357095 A1 | 09-11-2023 |
| | | | WO | 2022056419 A1 | 17-03-2022 |
| CN 113207470 | A | 06-08-2021 | NONE | | |
| US 5950362 | A | 14-09-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZENG J** ; **ZHANG M** ; **SUN X**. Molecular hydrogen is involved in phytohormone signaling and stress responses in plants.. *PLoS One.*, 2013, vol. 8 (8), e71038
- **GAFFRON H** ; **RUBIN J.** Fermentative and photochemical production of hydrogen in algae.. *J Gen Physiol*, 1942, vol. 26, 219-240
- **GA, SANADZE.** Absorption of molecular hydrogen by green leaves in light.. *Fiziol Rast.*, 1961, vol. 8, 555-559
- **JIN Q,** ; **ZHU K** ; **CUI W,** ; **XIE Y** ; **HAN B,** ; **SHEN W.** Hydrogen gas acts as a novel bioactive molecule in enhancing plant tolerance to paraquat-induced oxidative stress via the modulation of heme oxygenase-1 signalling system.. *Plant Cell Environ.*, 2013, vol. 36 (5), 956-969
- **PENG-JU REN**. Effect of hydrogen-rich water on vase life and quality in cut lily and rose flowers.. *Horticulture, Environment and Biotechnology*, December 2017, vol. 58 (6), 576-584
- **HUMPHREYS:, SPENCER**. Argon Packaging and Processing Preserves and Enhances Flavor, Freshness, and Shelf Life of Foods. *Freshness and Shelf Life of Foods Chapter*, vol. 20, 270-291

- **LAGNIKA, CAMEL** ; **ZHANG, MIN** ; **BASHARI, MOHANAD** ; **TOUNKARA, FATOUMATA.** Effects of Pressurized Argon and Krypton Treatments on the Quality of Fresh White Mushroom (Agaricus bisporus).. *Journal of food and nutrition research.*, 2013, vol. 4, 1191-1200
- **TINEBRA, I. et al.** Effects of Argon-Based and Nitrogen-Based Modified Atmosphere Packaging Technology on the Quality of Pomegranate (Punica granatum L. cv. Wonderful) Arils.. *Foods*, 2021, vol. 10, 370
- **WU ZS,** ; **ZHANG M** ; **WANG SJ.** Effects of high-pressure argon and nitrogen treatments on respiration, browning and antioxidant potential of minimally processed pineapples during shelf life.. *J Sci Food Agric.*, 24 February 2012, vol. 92 (11), 2250-9
- **RAYMOND, LINDA** ; **MING, ZHANG** ; **ERIC, KARANGWA** ; **CHESEREK, MAUREEN.** Mixed noble gas effect on cut green peppers... *International Agrophysics.*, 2013, vol. 27, 75-79
- **ZHANG, MAGGIE** ; **ZHAN, Z.G.** ; **WANG, SHAOJIN** ; **TANG, J.M.** Extending the shelf life of asparagus spears with a compressed mix of argon and xenon gases.. *LWT - Food Science and Technology.*, 2008, vol. 41, 686-691